# FASCICULE DE BREVET EUROPEEN

(11) **EP 0 768 591 B1**
(45) Date de publication et mention de la délivrance du brevet: **07.03.2001**
(21) Numéro de dépôt: 96401978.0
(22) Date de dépôt: 18.09.1996
(51) Int. Cl.: G05D 23/02, F01P 7/16

(54) **Procédé et dispositif de régulation de la température d'un fluide**
Methode und Vorichtung für Temperaturregelung eines Fluides.
Method and device for fluid temperature control.

(30) Priorité: 02.10.1995 FR 9511694
(43) Date de publication de la demande: 16.04.1997
(73) Titulaire: INSTITUT FRANCAIS DU PETROLE, 92502 Rueil-Malmaison (FR)
(72) Inventeur: Trapy, Jean, 92500 Rueil-Malmaison (FR)

(56) Documents cités:
- DE-B- 1 523 307
- FR-A- 1 397 781
- GB-A- 977 658
- GB-A- 2 067 723
- US-A- 2 137 136
- US-A- 2 754 062
- PATENT ABSTRACTS OF JAPAN vol. 10, no. 281 (M-520), 25 Septembre 1986 & JP 61 101617 A (NIPPON THERMOSTAT KK), 20 Mai 1986,
- PATENT ABSTRACTS OF JAPAN vol. 10, no. 130 (M-478), 14 Mai 1986 & JP 60 256692 A (FUJI TOMUSON KK), 18 Décembre 1985,

## Description

La présente invention concerne le domaine des vannes thermostatiques, destinées à réguler la température via le débit de fluide qui les traverse. Les procédés de régulation associés sont en outre visés par l'invention.

Plus précisément, la présente invention est relative aux vannes actionnées par un premier élément thermosensible, ou thermodilatable tel que de la cire dilatable.

De façon classique, dans de telles vannes une capsule renfermant de la cire dilatable et en contact avec le fluide agit sur un clapet qui s'ouvre dès que la température de la capsule dépasse un seuil ; le clapet reste fermé au-dessous de ce seuil.

Une application particulièrement intéressante de ce type de vannes a trait aux circuits de refroidissement de moteurs thermiques. Dans ce cas, les thermostats sont placés sur les circuits de refroidissement des moteurs, à un endroit où ils peuvent court-circuiter le radiateur à froid afin d'éviter que le liquide de refroidissement ne traverse alors le radiateur. Ceci évite que le liquide soit refroidi en traversant le radiateur et contribue donc à accélérer le chauffage du moteur et de l'habitacle. Lorsque le moteur est chaud, le rôle de telles vannes est de maintenir la température du liquide dans un intervalle de régulation déterminé, par exemple entre 80° et 90°C.

Ainsi il existe des vannes contenant des éléments thermosensibles ayant une première valeur de seuil correspondant à une faible ouverture de la vanne et un deuxième seuil de température, plus élevé pour la pleine ouverture. L'intervalle de régulation se situe entre ces deux valeurs.

De nombreuses publications ont déjà été faites dans ce domaine, telles que par exemple les brevets US 4 875 437, US 4 828 167 ou les demandes de brevet EP 383 249, EP 653 554, FR 2 668 853.

Ces documents décrivent des améliorations autour du concept de base énoncé ci-avant.

Le brevet japonais JP 60 256692 présente un dispositif possédant deux moyens de dilatation en contact permanent avec le fluide. Un des systèmes de dilatation se dilate à partir d'un certain seuil, alors que l'autre débute sa dilatation à un deuxième seuil correspondant à une température plus élevée du fluide

Le brevet japonais JP 61 101 617 présente un thermostat à deux seuils. Le deuxième élément thermosensible est atteint lorsque la soupape est ouverte pour le premier élément. Il est à noter que dans ce cas, le deuxième élément est sensible à une température plus élevée que le premier.

Le brevet US 2 137 136 décrit une combinaison de deux thermostats de seuil de température différent situé en aval de deux clapets permettant une ouverture différente en fonction de la température du liquide de refroidissement.

Le brevet FR 1 397 781 montre une combinaison de thermostats disposés en série et destiné à ouvrir un vannage à des températures différentes.

La présente invention présente notamment une solution simple et originale au problème des oscillations de la température du liquide autour d'une valeur de régulation.

En pratique, ces oscillations sont dues à une succession d'ouvertures et de fermetures de la vanne, induites par le délai de réponse non nul de l'élément thermosensible.

Bien entendu ces diverses oscillations ne sont pas souhaitables car, dans le cas de la régulation de circuits de refroidissement de moteurs, elles perturbent la régulation et soumettent les circuits à des contraintes de pression et de températures périodiques qui peuvent fatiguer les éléments du circuit.

Des solutions à ce problème ont déjà été proposées, comme par exemple des thermostats à multi-seuils, ou à laminage mais ces solutions sont souvent plus compliquées, donc plus coûteuses.

La présente invention permet notamment de remédier de façon simple et efficace au problème énoncé ci-avant.

Ainsi la présente invention a pour objet un procédé de régulation de la température dans un circuit de fluide comprenant une vanne thermostatique.

Selon l'invention, le procédé consiste à maintenir un débit de fuite à travers la vanne une fois que celle-ci a été ouverte une première fois afin d'éliminer les oscillations de la température dudit fluide autour d'une température de régulation.

Plus précisément, on utilise au moins deux éléments thermodilatables dont les seuils de dilatation de température sont différents, le seuil de l'élément provoquant la fuite étant inférieur aux autres.

L'invention concerne en outre une vanne thermostatique destinée à réguler la température d'un fluide autour d'au moins une valeur et comprenant au moins un premier élément thermodilatable.

Conformément à l'invention, la vanne comprend en outre des moyens destinés à maintenir un débit de fuite contrôlé dès que la vanne a été ouverte (une première fois).

De façon particulière, les moyens assurant le débit de fuite comprennent un deuxième élément thermodilatable placé au contact du fluide lorsque la vanne a déjà été ouverte une première fois.

Avantageusement, le premier et le deuxième élément thermodilatables sont constitués de cires dilatables ayant chacune un seuil de température de dilatation différent.

Ainsi, le seuil de température de dilatation de la cire utilisée pour assurer le débit de fuite est inférieur ou égal au seuil de température de dilatation de la cire utilisée pour la première ouverture de la vanne.

D'autres caractéristiques, avantages et détails de la présente invention apparaîtront mieux à la lecture de la description qui va suivre, faite à titre illustratif et nullement limitatif en référence aux dessins annexés sur lesquels :
- La figure 1 montre une courbe de température du liquide régulée en fonction du temps, selon l'art antérieur;
- La figure 2 est un schéma simplifié d'un thermostat connu;
- La figure 3 est une courbe de température du liquide régulée en fonction du temps, obtenue selon l'invention;
- La figure 4 est un schéma simplifié d'une vanne thermostatique selon l'invention, représentée à l'état fermé; et
- La figure 5 est un schéma simplifié d'une vanne selon l'invention, à l'état ouvert.

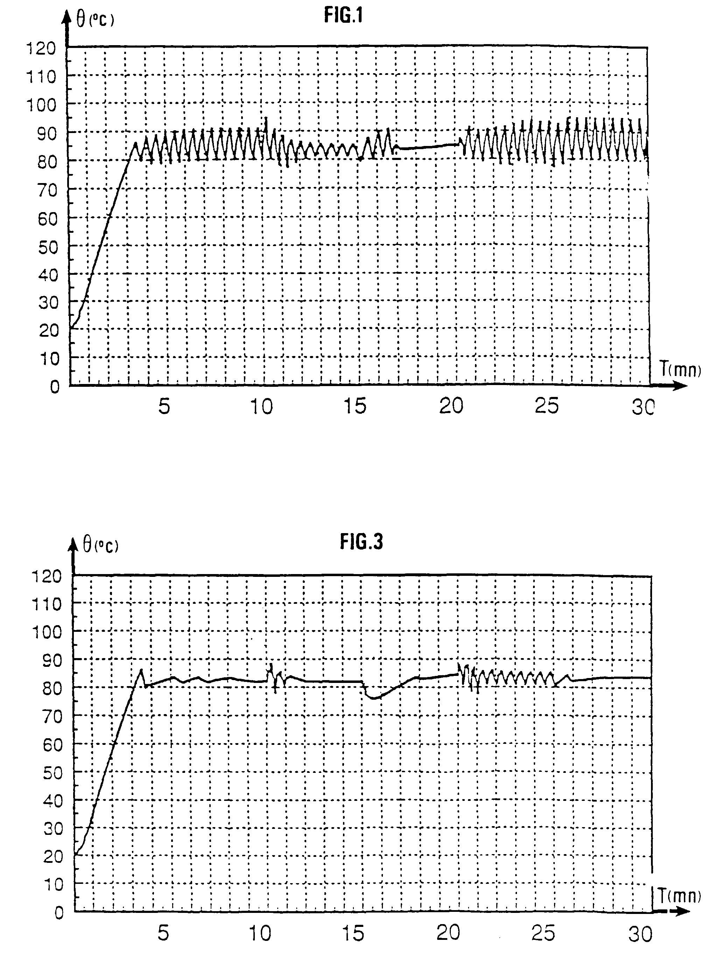

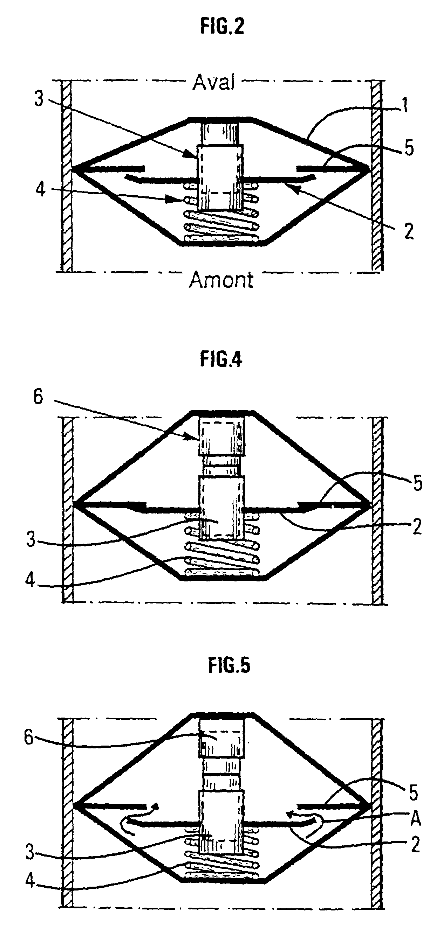

La figure 1 concerne donc le fonctionnement d'une vanne thermostatique connue, telle que représentée par exemple sur la figure 2. Plus précisément la courbe de la figure 1 a été obtenue en mesurant la température de l'eau d'un circuit de refroidissement d'un moteur thermique, en fonction du temps. Cette courbe montre une montée quasi-linéaire de la température, depuis la température ambiante (20°) jusque vers 82°C qui est couramment la température de régulation. Cette montée en température est réalisée en environ 5 mn.

Ensuite la température oscille entre 80 et 90°C, pendant tout le temps du fonctionnement du moteur. Ces oscillations ne sont bien évidemment pas souhaitables pour les raisons exposées plus haut.

Une vanne thermostatique couramment utilisée pour obtenir la régulation évoquée ci-dessus est représentée schématiquement sur la figure 2. Les éléments essentiels d'une telle vanne sont un boîtier 1, un clapet 2, un siège 5 pour le clapet 2, un élément thermodilatable 3 associé à un élément de rappel 4.

L'élément thermodilatable 3 peut être, de façon connue, une capsule renfermant de la cire dilatable continuement sur un intervalle de température.

L'élément 3 étant toujours en contact avec le liquide à réguler, la cire qu'il contient se dilate lorsque la température dudit liquide augmente, ce qui a pour effet d'exercer une poussée contre le ressort de rappel 4 et donc d'éloigner le clapet 2 de son siège 5. Ceci autorise donc le passage du liquide de refroidissement à travers la vanne.

La cire commence à se dilater à partir d'une première température donnée et permet un premier allongement de l'élément 3 c'est-à-dire une ouverture de faible amplitude de la vanne, tandis que lorsque le liquide atteint une deuxième température (supérieure à la première) qui correspond donc au seuil de dilatation maximum de la cire, la vanne s'ouvre plus largement autorisant ainsi un plus grand débit.

Comme on l'aura compris, le principe de fonctionnement de ce type de vanne repose sur une régulation du débit qui peut être nul, faible ou au contraire maximum.

Dans la réalité la régulation de température se fait de façon non satisfaisante, par une série d'ouvertures et de fermetures successives de la vanne, d'où les oscillations visibles sur la figure 1, avec les conséquences évoquées ci-avant.

Si de telles vannes sont utilisées pour d'autres applications, dans le domaine sanitaire par exemple, les oscillations ne sont pas davantage acceptables pour l'utilisateur qui souhaite obtenir une eau à température stable, et ce rapidement et de façon fiable et reproductible.

La figure 3 montre une courbe obtenue selon la présente invention. Cette courbe est à comparer à celle de la figure 1, les conditions de fonctionnement étant les mêmes. On constate une quasi absence d'oscillations autour de la température de régulation qui ici se situe vers 83°C.

Cette caractéristique a été obtenue en maintenant de façon surprenante un débit de fuite à travers la vanne, une fois que celle-ci a été ouverte une première fois. Contrairement à ce qu'il ressort de l'enseignement de l'art antérieur, où l'on cherche par exemple à réaliser une étanchéité parfaite au-dessous d'un certain seuil de température, il est ici toléré un débit de fuite dès que la première ouverture a eu lieu.

Il est important que la fuite n'intervienne pas avant la première ouverture de la vanne car cela serait préjudiciable à la montée en température du liquide, qui avant la première ouverture, doit être dévié et ne pas passer à travers la vanne.

Comme il va être expliqué ci-après, deux éléments thermodilatables dont les seuils de dilatation sont différents, sont avantageusement utilisés dans la vanne selon l'invention.

La figure 4 montre de façon schématique un mode de réalisation de l'invention. La vanne thermodilatable comprend essentiellement les mêmes éléments que celle montrée sur la figure 2 à savoir un boîtier 1, un clapet 2 et un siège 5 pour le clapet, un premier élément thermodilatable 3 associé à un ressort de rappel 4. En outre la vanne selon la figure 4 comprend un deuxième élément thermodilatable 6, placé côté aval de la vanne c'est-à-dire qui n'est pas en contact avec le fluide quand la vanne est fermée, comme montré sur la figure 4. Le premier élément thermodilatable est donc placé en amont du clapet tandis que le deuxième élément est placé en aval.

Bien entendu le boîtier 1 est ici un peu plus haut que dans une vanne classique, à cause de la présence du deuxième élément thermodilatable 6 placé préférentiellement dans le prolongement de l'élément 3.

La figure 5 montre la vanne de la figure 4 avec un débit de fuite (flèches A) qui est obtenu grâce au deuxième élément thermodilatable 6 placé côté aval de la vanne, dans le prolongement du premier élément thermodilatable 3, afin de pouvoir combiner sa propre poussée avec la poussée du premier élément thermodilatable 3.

Ainsi lorsque la température du liquide dans lequel baigne en permanence le premier élément thermodilatable 3 atteint un certain seuil, celui-ci (3) se dilate ce qui permet une première ouverture de la vanne. Le deuxième élément thermodilatable 6 est alors à son tour baigné par le liquide. Son seuil de température étant plus faible que celui du premier élément thermodilatable, le deuxième élément thermodilatable 6 se dilate de sorte que le clapet 3 ne peut plus venir en contact avec son siège 5. Ceci crée donc un débit de fuite en maintenant une levée résiduelle en cas de nouvelle ouverture de la vanne.

Le débit de fuite doit être suffisant pour conserver le deuxième élément thermodilatable 6 en extension, d'où le seuil de température de dilatation inférieur à celui du premier élément thermodilatable 3.

A titre indicatif, le seuil de température de dilatation du deuxième élément thermodilatable peut être de l'ordre de 50 à 60°C, tandis que celui du premier élément thermodilatable peut se situer entre 80 et 90°C.

Dans le cas d'une application à un circuit de refroidissement d'un moteur et selon une caractéristique intéressante de l'invention, une fois le moteur arrêté, avec la baisse générale de la température, la vanne revient automatiquement dans son état d'origine, c'est-à-dire fermé comme représenté sur la figure 4. A chaque démarrage du moteur, la vanne selon l'invention est fermée et elle s'ouvre une première fois lorsque le liquide de refroidissement atteint une certain température.

Le mode de réalisation de l'invention envisagé au-dessus montre que les deux éléments thermodilatables 3, 6 agissent sur le même clapet 2. Sans sortir du cadre de l'invention, il peut être envisagé que chaque élément thermodilatable agit sur un clapet, si cela apparaît souhaitable.

## Revendications

1. Vanne thermostatique destinée à réguler et réduire les fluctuations de la température d'un fluide autour d'une température de régulation comprenant au moins : un boîtier (1), un clapet (2), un siège (5) coopérant avec ledit clapet, un premier élément thermodilatable agissant sur le clapet (2), ledit premier élément étant en contact avec le fluide et en amont dudit clapet (2) et un second élément thermodilatable en aval dudit clapet, ledit second élément agissant également sur le clapet (2) pour maintenir un débit de fuite contrôlé, le second élément thermodilatable présentant un seuil de température inférieur à celui du premier élément thermodilatable.

2. Vanne thermostatique selon l'une des revendications précédentes caractérisée en ce que les deux éléments thermodilatables sont constituées de cires dilatables ayant chacune un seuil de température différent.

3. Application de la vanne selon l'une quelconque des revendications précédentes à un circuit de refroidissement à liquide de moteurs thermiques.

4. Méthode permettant de réguler la température d'un circuit de fluide autour d'une température de régulation grâce à une valve thermostatique caractérisée en ce qu'on dispose deux éléments thermodilatables respectivement en aval et en amont d'un clapet d'ouverture de ladite valve, chacun desdits éléments agissant sur ledit clapet pour réguler et réduire les fluctuations de la température dudit fluide, l'élément thermodilatable aval présentant un seuil de température inférieur à celui de l'élément thermodilatable amont.

## Patentansprüche

1. Thermostatisches Ventil, das dazu bestimmt ist, die Temperaturschwankungen eines Fluids um eine Einstell- oder Regulierungstemperatur einzustellen und zu vermindern, zumindest umfassend: ein Gehäuse (1), eine Klappe (2), einen Sitz (5), der mit dieser Klappe zusammenwirkt, wobei ein erstes in der Wärme sich ausdehnendes Element auf die Klappe (2) wirkt, das erste Element in Kontakt mit dem Fluid und der Anströmseite dieser Klappe (2) steht und ein zweites in der Wärme ausdehnbares Element mit der Abströmseite dieser Klappe in Kontakt steht, wobei das zweite Element ebenfalls auf die Klappe (2) einwirkt, um eine geregelte Verlustmenge aufrecht zu erhalten, wobei das zweite in der Wärme sich ausdehnende Element eine Temperaturschwelle aufweist, die geringer als die des ersten in der Wärme sich ausdehnenden Elementes ist.

2. Thermostatisches Ventil nach einem der vorhergehenden Ansprüche, dadurch gekennzeichnet, dass die beiden sich in der Wärme ausdehnenden Elemente gebildet werden aus ausdehnbaren Wachsen, die je eine unterschiedliche Temperaturschwelle haben.

3. Anwendung des Ventils nach einem der vorhergehenden Ansprüche auf einen Flüssigkeitskühlkreislauf von Verbrennungskraftmaschinen.

4. Verfahren, das es ermöglicht, die Temperatur eines Fluidkreises um eine Einstelltemperatur dank eines thermostatischen Ventils einzustellen oder zu regulieren, dadurch gekennzeichnet, dass man zwei in der Wärme ausdehnbare Elemente jeweils anströmseitig und abströmseitig zu einer Klappe zum Öffnen dieses Ventils anordnet, wobei jedes dieser Elemente auf diese Klappe einwirkt, um die Temperaturschwankungen dieses Fluids einzustellen bzw. zu regulieren und zu vermindern, wobei das in der Wärme sich ausdehnende abströmseitige Element eine Temperaturschwelle aufweist, die geringer als die des anströmseitigen in der Wärme sich ausdehnenden ausströmseitigen Elementes ist.

## Claims

1. Thermostatic valve designed to regulate and reduce the fluctuations of the temperature of a fluid about a regulation temperature comprising at least: a housing (1), a flap (2), a seat (5) co-operating with said flap, a first thermodilatable element acting on the flap (2), said first element being in contact with the fluid and upstream of said flap (2), and a second thermodilatable element downstream of said flap, said second element also acting on the flap (2) to maintain a controlled leakage rate, the second thermodilatable element exhibiting a lower temperature threshold than that of the first thermodilatable element.

2. Thermostatic valve according to one of the preceding claims, characterised in that the two thermodilatable elements are constituted by dilatable waxes each having a different temperature threshold.

3. Application of the valve according to any one of the preceding claims to a liquid cooling circuit for heat engines.

4. Method for regulating the temperature of a fluid circuit about a regulation temperature with the aid of a thermostatic valve, characterised in that two thermodilatable elements are disposed respectively downstream and upstream of an opening flap of said valve, each of said elements acting on said flap in order to regulate and reduce the fluctuations of the temperature of said fluid, the downstream thermodilatable element exhibiting a lower temperature threshold than that of the upstream thermodilatable element.
